# EUROPÄISCHE PATENTANMELDUNG

(11) **EP 2 594 932 A2**
(43) Veröffentlichungstag der Anmeldung: **22.05.2013**
(21) Anmeldenummer: 12191820.5
(22) Anmeldetag: 08.11.2012
(51) Int. Cl.: G01N 29/04, G01N 29/22, G01N 29/24, G01N 29/28

(54) **Vorrichtung zur berührungslosen Überprüfung von Werkstücken sowie Verfahren zur berührungslosen Anregung und Empfang von Ultraschallwellen in Werkstücken**

(30) Priorität: 15.11.2011 DE 102011118596
(71) Anmelder: Fraunhofer-Gesellschaft zur Förderung der angewandten Forschung e.V., 80686 München (DE)
(72) Erfinder: Hübschen, Gerhard, Dr., 66740 Saarlouis (DE); Gebhardt, Wolfgang, Dr., 66583 Spiesen-Elversberg (DE); Licht, Rudolf, 66440 Blieskastel (DE); Bruche, Dietmar, 66121 Saarbrücken (DE)
(74) Vertreter: Pfenning, Meinig & Partner GbR

(57) **Zusammenfassung**

Die vorliegende Erfindung betrifft eine Vorrichtung zur berührungslosen Überprüfung von Werkstücken, die mindestens einen elektromagnetischen Ultraschallwandler (EMUS-Wandler) sowie mindestens einen Luftschallwandler umfasst. Zudem betrifft die Erfindung ein Verfahren zur berührungslosen Anregung und Empfang von Ultraschallen in Werkstücken aus elektrisch leitfähigen Materialien, wobei mittels eines elektromagnetischen Wechselfeldes im Werkstück Ultraschall induziert und der Ultraschall akustisch detektiert wird. Alternativ oder zusätzlich hierzu ist es erfindungsgemäß ebenso möglich, mittels Ultraschall im Werkstück ein elektromagnetisches Wechselfeld zu induzieren und das elektromagnetische Wechselfeld zu detektieren.

## Beschreibung

Die vorliegende Erfindung betrifft eine Vorrichtung zur berührungslosen Überprüfung von Werkstücken, die mindestens einen elektromagnetischen Ultraschallwandler (EMUS-Wandler) sowie mindestens einen Luftschallwandler umfasst. Zudem betrifft die Erfindung ein Verfahren zur berührungslosen Anregung und Empfang von Ultraschallen in Werkstücken aus elektrisch leitfähigen Materialien, wobei mittels eines elektromagnetischen Wechselfeldes im Werkstück Ultraschall induziert und der Ultraschall akustisch detektiert wird. Alternativ oder zusätzlich hierzu ist es erfindungsgemäß ebenso möglich, mittels Ultraschall im Werkstück ein elektromagnetisches Wechselfeld zu induzieren und das elektromagnetische Wechselfeld zu detektieren.

In elektrisch leitfähigen Materialien können durch Nutzung von Lorentz Kräften, der Magnetostriktion und magnetischen Kräften (im Fall ferromagnetischer Materialien) Ultraschallwellen angeregt und empfangen werden. Hierbei wird kein Koppelmittel benutzt. Prinzipiell ist eine berührungslose Anregung möglich. Die Wandler müssen allerdings sehr nah an der Werkstoffoberfläche angeordnet werden.

Die Ultraschallprüfung hat sich in der Qualitätssicherung von Bauteilen und Anlagen seit vielen Jahren bewährt. Zumeist werden fokussierte oder nichtfokussierte Ultraschallwellen über ein flüssiges Medium in den Prüfling ein- und ausgekoppelt.

In vielen Fällen ist der Einsatz einer Koppelflüssigkeit jedoch nicht erwünscht oder gar unmöglich. Weltweit wurden daher Ultraschallverfahren entwickelt, die ohne Koppelflüssigkeiten auskommen. Hier seien nur die EMUS-Technik und Luftschalltechnik genannt.

Die EMUS Technik bietet folgende Vorteile:
- Es ist eine sehr große Vielfalt unterschiedlichster elastischer Wellentypen, insbesondere geführte Ultraschallwellen berührungslos ohne Koppelmittel nutzbar.
- Es ist es möglich temperaturbeständige Ultraschallwandler zu realisieren.

Die EMUS-Technik besitzt jedoch die folgenden entscheidenden Nachteile:
- Eine Fokussierung auf die Oberfläche oder auf oberflächennahe Bereiche ist nicht möglich; damit ist das laterale Auflösungsvermögen in diesen Bereichen äußerst gering.
- Die Sendeeinflusszone ("tote Zone") beim Senden und Empfang senkrecht sich ausbreitender Wellen schränkt entscheidend den Einsatz von EMUS-Wandlern an dünnwandigen Bauteilen (Wanddickenmessung, Rissdetektion) ein.
- Der geringe Wirkungsgrad und damit die notwendigen hohen Sendeleistungen, die Einschränkung des Frequenzbereichs bei der Winkeleinschallung und die geringeren Verstärkungsreserven im Vergleich zu piezoelektrischen Prüfköpfen.

Die Übertragung von Ultraschallwellen über eine gasförmige Koppelstrecke (beispielsweise Luft) wurde weltweit entwickelt. Entsprechende Prüfgeräte sind kommerziell erhältlich (genannt seien hier stellvertretend die US-amerikanische Firma ULTRAN und die deutsche Firma Dr. HILLGER).

Diese Luftschall-Prüftechnik wird fast ausnahmslos zur Durchschallungsprüfung von meist plattenförmigen Teilen eingesetzt. Eine Prüfung, bei der Sender und Empfänger auf der gleichen Seite angeordnet sind, ist nur in ganz speziellen Fällen möglich. Grund hierfür ist störender Schall, der direkt von der Oberfläche des zu prüfenden Bauteils in den Empfänger reflektiert oder gestreut wird und die wesentlich kleineren Echoanzeigen aus dem Bauteilinneren überlagern und verdecken.

Die Luftschallwandler-Technik besitzt die folgenden wesentlichen Vorteile:
- Es wird keine Koppelflüssigkeit benötigt.
- Das Schallbündel kann auf die Prüflingsoberfläche fokussiert werden, wodurch ein hohes laterales Auflösungsvermögen erzielt wird (bei einer Prüffrequenz von 500 kHz etwa 1 mm).

Die Luftschallwandlertechnik besitzt hingegen die beiden folgenden wesentlichen Nachteile:
- Durch den hohen Reflexionsfaktor an der Grenzfläche Luft - Prüfling werden hohe Oberflächensignale erzeugt, die insbesondere eine Prüfung von einer Seite mit senkrecht zur Oberfläche sich ausbreitenden Wellen praktisch unmöglich macht.
- Die Anregung verschiedener Wellentypen ist nur bedingt möglich.

Bisher wurden zur Ultraschallanregung und zum Empfang in Festkörpern nur Kombinationen von piezoelektrischen Ultraschallwandlern in Kontakttechnik und EMUS-Wandlern und Laseranregung von Ultraschall und Empfang mittels EMUS-Wandlern oder umgekehrt genutzt. Derartige Vorrichtungen und Verfahren sind z.B. in den nachfolgenden Literaturstellen beschrieben: Clark, A.V., Schaps, S.R.; Fortunko, C.M.: A Well-Shielded EMAT for On-Line Ultrasonic monitoring of GMA Welding, Proc. 1991 Ultrasonic Symposium, B.R. McAvoy ed. (IEEE, New York, 1991) pp. 337-340; Carlson, N.M.; Johnson, J.A.; Rodriquez, J.G.: Enhancement of Laser/EMAT Ultrasonics, Proc. 1994, Rev. Prog. In QNDE, Vol.13, D.O. Thompson and D.E. Chimenti eds. (Plenu, New York, 1994) pp. 709-715; Hutchins, D.A.; Jansen, D.P.; Edwards, C.: Lamb Wave Tomography Using Non-contact Transduction, Ultrasonics 31(2), 1993, pp.97-103; Oursler, D.A.; Wagner, J.W.: Narrow band hybrid pulsed laser/EMAT system for noncontact ultrasonic inspection using angled shear waves, Mat. Eval. 53, 593-597 (1995); Hutchins, D.A.; Wright, W.M.D.; Hayward, G.; Gachagan, A.: Air coupled piezoelectric detection of laser generated ultrasound, IEEE trans. Ultrason. Ferroelec. Freq. Control. UFFC-41, pp. 796-805 (1994); Wright, W.M.D.; Schindel, D.W.; Hutchins, D.A.: Studies of lasergenerated ultrasound using a micromachined silicon electrostatic transducer in air. J. Acoust. Soc. Am. 95, pp 2567-2575 (1994). Im ersten Fall besteht der Nachteil darin, dass Koppelmittel erforderlich sind und somit die Anregung und der Empfang nicht berührungslos erfolgt. Im zweiten Fall der Anregung mit Laser und dem Empfang mit EMUS-Wandlern erfolgt die Wandlung zwar berührungslos allerdings wird durch die Laseranregung eine Vielzahl von Wellenmoden erzeugt, die die Interpretation von Messergebnissen sehr erschweren.

Bisher sind Anwendungen der Luftschalltechnik bei der Senkrechteinschallung an metallischen Komponenten wegen der großen toten Zone, die durch das Oberflächenecho verursacht wird, fast ausschließlich auf die Durchschallungsmethode beschränkt. Dies bedeutet, dass eine Wanddickenmessung oder Fehlerprüfung einer dünnwandigen Komponente bei nur einseitiger Zugänglichkeit nicht möglich ist. Für die Wanddickenmessung in Gaspipelines wurden EMUS-Wandler für die Senkrechteinschallung linear polarisierter Transversalwellen entwickelt Niese, F.; Willems, H.; Barbian, O.-A.: New Approaches for the Quantitative Wall Thickness Measurement in Gas Pipelines, die eine horizontale Vormagnetisierung der Rohrwand nutzen.

Aufgabe der vorliegenden Erfindung ist es daher, eine Vorrichtung zur berührungslosen Überprüfung von Werkstücken anzugeben, die eine hohe Prüfempfindlichkeit, eine verbesserte Auflösung und eine einfache Handhabung garantiert. Zudem ist es Aufgabe der vorliegenden Erfindung, ein Verfahren zur berührungslosen Anregung und Empfang von Ultraschallwellen in Werkstücken anzugeben, das die zuvor genannten Anforderungen erfüllt.

Diese Aufgabe wird bezüglich der Vorrichtung mit den Merkmalen des Patentanspruchs 1, bezüglich eines Verfahrens mit den Merkmalen des Patentanspruchs 9 gelöst. Die jeweiligen abhängigen Patentansprüche stellen dabei vorteilhafte Weiterbildungen dar.

Die Erfindung betrifft somit gemäß Patentanspruch 1 eine Vorrichtung zur berührungslosen Überprüfung von Werkstücken, umfassend mindestens einen elektromagnetischen Ultraschallwandler (EMUS-Wandler) sowie mindestens einen Luftschallwandler.

Gemäß der vorliegenden Erfindung wird unter Ultraschall Schall mit einer Frequenz von 10 kHz bis 1 GHz verstanden. Ein elektromagnetischer Ultraschallwandler (EMUS-Wandler) ist gemäß der vorliegenden Erfindung eine Vorrichtung, die ein elektromagnetisches Wechselfeld im Frequenzbereich des Ultraschalls erzeugen oder detektieren kann. EMUS-Wandler sind in der Lage, in elektrisch leitenden Materialien durch die Lorenz-Kraft oder durch den magnetostriktiven Effekt oder durch eine Kombination dieser beiden Phänomene Ultraschallwellen zu erzeugen bzw. entsprechende Ultraschallwellen aufgrund der gleichen Phänomene in elektrisch leitenden Materialien zu detektieren. Erfindungsgemäß wird unter einem Luftschallwandler eine Vorrichtung verstanden, die ein angelegtes elektromagnetisches Feld in Ultraschall wandeln kann bzw. ein detektiertes Ultraschall-Signal in ein elektromagnetisches Signal wandeln kann.

Die vorliegende Erfindung basiert nun darauf, einen EMUS-Wandler mit einem Luftschallwandler zu kombinieren. Dabei ist bevorzugt eine der Komponenten, d.h. EMUS-Wandler oder Luftschallwandler, als aktive Komponente ausgebildet. Zum Beispiel kann der EMUS-Wandler so gesteuert werden, dass er ein elektromagnetisches Wechselfeld erzeugt, mit dem in elektrisch leitfähigen Materialien Ultraschall induzierbar ist. Alternativ kann ein aktiver Luftschallwandler Ultraschall zur Induktion von elektromagnetischen Wechselfeldern in elektrisch leitfähigen Materialien aussenden. Mindestens eine Komponente aus EMUS-Wandler und Luftschallwandler ist dabei als passive Komponente konzipiert, d.h. der EMUS-Wandler ist als Detektor zur Detektion von elektromagnetischen Wechselfeldern im Frequenzbereich des Ultraschalls in elektrisch leitfähigen Materialien konzipiert, wobei der EMUS-Wandler die detektierten Signale in ein elektrisches und/oder elektronisches Signal umwandelt oder der Luftschallwandler als Detektor von Ultraschall dient und in der Lage ist, entsprechend detektierten Ultraschall in ein elektrisches und/oder elektronisches Signal zu wandeln.

Bevorzugt umfasst die erfindungsgemäße Vorrichtung mindestens einen aktiven EMUS-Wandler und mindestens einen passiven Luftschallwandler oder mindestens einen passiven EMUS-Wandler und mindestens einen aktiven Luftschallwandler.

Gemäß einer bevorzugten Ausführungsform der erfindungsgemäßen Vorrichtung umfasst der mindestens eine elektromagnetische Ultraschallwandler mindestens einen Magneten zur Erzeugung eines permanenten Bias-Magnetfeldes, insbesondere einen Permanentmagneten, einen Elektromagneten und/oder Kombinationen hieraus sowie mindestens eine Spule zur Erzeugung oder Detektion eines parallel zum permanenten Bias-Magnetfeld verlaufenden temporären magnetischen Wechselfeldes.

Weiter ist es vorteilhaft, wenn der mindestens eine Magnet zur Erzeugung eines permanenten Magnetfeldes über ein die beiden Pole des Magneten verbindendes Magnetjoch verfügt und die mindestens eine Spule in Aufsicht auf das Magnetjoch unterhalb des Magnetjochs angeordnet ist.

Der mit einem Magnetjoch ausgeführte Magnet kann dabei beispielsweise als Magnetbrücke ausgeführt sein, wobei die beiden Pole des Magneten mittels einer Art Bügel miteinander verbunden sind. Ebenso ist es möglich, dass ein Pol des Magneten von der Mitte des Magnetjochs abgezweigt ist, während der andere Pol des Magneten über mindestens zwei Fortsätze des Magnetjochs realisiert ist.

Das Magnetjoch ist dabei vorzugsweise aus einem ferromagnetischen Material gebildet.

Durch die direkte Anordnung der Spule unterhalb des Magnetjochs ist gewährleistet, dass die Spule direkt im vom Magneten bereitgestellten Magnetfeld angeordnet ist und somit eine effiziente Überlagerung des vom Magneten bereitgestellten permanenten Bias-Magnetfeldes und des von der Spule erzeugten wechselnden elektromagnetischen Feldes bzw. des empfangenen Wechselfeldes gewährleistet ist.

Weiter vorteilhaft ist, wenn der mindestens eine Luftschallwandler in Aufsicht auf das Magnetjoch unterhalb des Magnetjochs angeordnet ist.

Insbesondere ist hierbei vorteilhaft, wenn der mindestens eine Luftschallwandler zwischen Magnetjoch und der Spule angeordnet ist.

Eine derartige Ausgestaltung garantiert eine unmittelbare räumliche Nähe des Luftschallwandlers und der Spule, was eine äußerst kompakte Ausführung der erfindungsgemäßen Vorrichtung ermöglicht. Zudem ist dadurch eine möglichst kurze Laufstrecke des empfangenen Signals möglich, so dass eine hohe Signalstärke und ein geringes Rauschen beim Empfang des Messsignals möglich ist.

Weiter bevorzugt verfügt die mindestens eine Spule über eine Aussparung, wobei der mindestens eine Luftschallwandler auf der dem Magnetjoch zugewandten Seite der Spule mittig über der Aussparung oder in der Aussparung angeordnet ist.

In einer weiter bevorzugten Ausführungsform kann ebenso der Luftschallwandler eine Aussparung aufweisen, durch die ein Pol des Magneten durchgeführt ist.

Die zuvor genannten Ausführungsformen ermöglichen somit, dass sowohl der Luftschallwandler als auch der EMUS-Wandler gemeinsam in einem Gehäuse, das beispielsweise auch durch den Magneten gebildet bzw. räumlich umrissen sein kann, beinhaltet sind.

In einer alternativen Ausführungsform der mindestens eine Luftschallwandler als separates, vom elektromagnetischen Ultraschallwandler (EMUS-Wandler) getrenntes Bauteil ausgeführt.

Gemäß dieser alternativen Ausführungsform ist es, vorteilhaft, wenn der mindestens einen Luftschallwandler beabstandet zum mindestens einen elektromagnetischen Ultraschallwandler (EMUS-Wandler) angeordnet ist, so dass ein zu überprüfendes Werkstück zwischen dem mindestens einen Luftschallwandler und dem mindestens einen elektromagnetischen Ultraschallwandler (EMUS-Wandler) durchführbar ist, wobei die Hauptabstrahlrichtung oder Hauptempfangsrichtung des mindestens einen Luftschallwandlers und die Hauptabstrahlrichtung oder Hauptempfangsrichtung des mindestens einen elektromagnetischen Ultraschallwandlers (EMUS-Wandler) einen Winkel von 100 bis 180° einschließen. Gemäß dieser bevorzugten Ausführungsform kann das zu überprüfende Werkstück zwischen dem Luftschallwandler und dem hierzu beabstandeten elektromagnetischen Ultraschallwandler durchgeführt werden. Der zuvor angegebene Winkel von 100 bis 180° ist definiert durch die Schnittpunkte der Hauptabstrahlrichtung und der Hauptempfangsrichtung des mindestens einen elektromagnetischen Ultraschallwandlers und/oder des mindestens einen Luftschallwandlers. Im Falle von 180° liegen somit Luftschallwandler und EMUS-Wandler genau gegenüber.

Alternativ oder zusätzlich hierzu ist es ebenso möglich, dass der mindestens einen Luftschallwandler beabstandet zum mindestens einen elektromagnetischen Ultraschallwandler (EMUS-Wandler) angeordnet ist, so dass sowohl der mindestens einen Luftschallwandler als auch der mindestens einen elektromagnetischen Ultraschallwandler (EMUS-Wandler) auf der gleichen Seite eines zu überprüfenden Werkstücks angeordnet sind, wobei die Hauptabstrahlrichtung oder Hauptempfangsrichtung des mindestens einen Luftschallwandlers und die Hauptabstrahlrichtung oder Hauptempfangsrichtung des mindestens einen elektromagnetischen Ultraschallwandlers (EMUS-Wandler) einen Winkel von 0 bis 80° einschließen.

Gemäß dieser bevorzugten Ausführungsform sind dabei mindestens ein EMUS-Wandler und mindestens ein Luftschallwandler auf der gleichen Seite des zu überprüfenden Werkstücks beabstandet zueinander angeordnet. Der Winkel zwischen 0 und 80° bemisst dabei die Hauptabstrahlrichtung bzw. Hauptempfangsrichtung der zuvor genannten EMUS-Wandler bzw. Luftschallwandler. Im Falle eines Winkels von 0° sind dabei der Luftschallwandler und der EMUS-Wandler beabstandet zueinander auf einer Seite des zu überprüfenden Werkstückes angeordnet, wobei die Hauptabstrahlrichtung und die Hauptempfangsrichtung der beiden Komponenten parallel zueinander ausgerichtet ist (woraus der Winkel von 0° resultiert). Beispielsweise kann vorgesehen sein, dass die Hauptabstrahlrichtung bzw. Hauptempfangsrichtung des elektromagnetischen Ultraschallwandlers oder des Luftschallwandlers genau auf eine Flächennormale des zu überprüfenden Werkstücks ausgerichtet sind. Bei Winkeln, die von 0° abweichen, ist die Hauptabstrahlrichtung bzw. Hauptempfangsrichtung des elektromagnetischen Ultraschallwandlers und des Luftschallwandlers verkippt zueinander ausgerichtet.

Eine weiter bevorzugte Ausführungsform sieht vor, dass die mindestens eine Spule einen kreisrunden, ovalen, rechteckigen oder Schmetterlings-förmigen Querschnitt aufweist. Bezüglich entsprechender Spulen wird auf den Artikel "New Approaches for the Quantitative Wall Thickness Measurement in Gas Pipelines" von F. Niese et al. verweisen. Die dort beschriebenen Spulen können auch erfindungsgemäß verwendet werden.

Insbesondere ist es vorteilhaft, wenn der mindestens eine elektromagnetische Ultraschallwandler (EMUS-Wandler) ein aktiver elektromagnetischer Ultraschallwandler zur Erzeugung elektromagnetischer Wechselfelder und der mindestens eine Luftschallwandler ein passiver Luftschallwandler zum Empfang akustischer Ultraschallwellen ist.

Alternativ hierzu ist es ebenso möglich, dass der mindestens eine elektromagnetische Ultraschallwandler (EMUS-Wandler) ein passiver elektromagnetischer Ultraschallwandler zum Empfang elektromagnetischer Wechselfelder und der mindestens eine Luftschallwandler ein aktiver Luftschallwandler zur Erzeugung akustischer Ultraschallwellen ist.

Erfindungsgemäß wird ebenso ein Verfahren zur berührungslosen Anregung und Empfang von Ultraschallwellen in Werkstücken aus elektrisch leitfähigen Materialien, bei dem
a) mittels eines elektromagnetischen Wechselfeldes in zumindest einem Bereich des Werkstücks Ultraschall induziert wird und der Ultraschall akustisch detektiert wird, und/oder
b) mittels Ultraschall in zumindest einem Bereich des Werkstücks ein elektromagnetisches Wechselfeld induziert wird und das elektromagnetische Wechselfeld detektiert wird.

Beim erfindungsgemäßen Verfahren ist bevorzugt, dass das zur Induktion von Ultraschall verwendete elektromagnetische Wechselfeld eine Frequenz in einem Bereich von 200 kHz bis 5 MHz, bevorzugt von 400 kHz bis 2 MHz.

Alternativ oder zusätzlich hierzu ist es ebenso bevorzugt, dass der zur Induktion des elektromagnetischen Wechselfeldes verwendete Ultraschall eine Frequenz in einem Bereich von 200 kHz bis 5 MHz, bevorzugt von 400 kHz bis 2 MHz aufweist.

Weiter vorteilhaft ist, wenn das zur Induktion von Ultraschall verwendete elektromagnetische Wechselfeld und/oder der zur Induktion des elektromagnetischen Wechselfeldes verwendet Ultraschall in einem Winkel von 0 bis 80° bezüglich einer Flächennormalen einer Oberfläche des Werkstücks eingestrahlt wird.

Alternativ oder zusätzlich hierzu ist es ebenso möglich, dass das induzierte elektromagnetische Wechselfeld und/oder der induzierte Ultraschall in einem Winkel von 0 bis 80° bezüglich einer Flächennormalen einer Oberfläche des Werkstücks detektiert wird.

In einer weiter bevorzugten Ausführungsform wird das induzierte elektromagnetische Wechselfeld und/oder der induzierte Ultraschall
a) auf der gleichen Seite des Werkstücks, und/oder
b) auf der gegenüberliegenden Seite des Werkstücks, von der die Induktion erfolgt, detektiert.

Zudem ist es bevorzugt, dass das Werkstück relativ zu einer parallel zur Flächennormalen der Oberfläche des Werkstücks verlaufenden Komponente des zur Induktion verwendeten elektromagnetischen Wechselfeldes und/oder Ultraschalls bewegt wird. Eine bevorzugte Bewegungsrichtung des Werkstückes ist dabei senkrecht zur parallel zur Flächennormalen der Oberfläche des Werkstücks verlaufenden Komponente des zur Induktion verwendeten elektromagnetischen Magnetfeldes und/oder Ultraschall.

Die beim Verfahren erhaltenen Messwerte können dahingehend ausgewertet werden, dass eine Änderung der Amplitude und/oder der Laufzeit des detektierten elektromagnetischen Wechselfeldes und/oder des Ultraschalls mit einer Änderung der Schichtdicke des Werkstücks und/oder dem Vorhandensein von Materialfehlern im Werkstück korreliert wird. Die empfangenen Signale können beispielsweise digitalisiert und weiterverarbeitet werden, z.B. mit einer geeigneten Auswertelektronik, Datenverarbeitungsanlage und/oder Software.

Ebenso ist es möglich, dass die Amplitudenortskurven des detektierten elektromagnetischen Wechselfeldes und/oder des Ultraschalls aufgezeichnet und die Amplitude und/oder die Phase des detektierten elektromagnetischen Wechselfeldes und/oder des Ultraschalls als Funktion des Ortes ausgewertet werden. Hierbei kann z.B. die Amplitudenortskurve in definierten Abständen beim Bewegen des Werkstücks aufgezeichnet werden. Diese Informationen können zur Bestimmung der Ortsauflösung herangezogen werden. Diese Informationen können zur Bestimmung von Lage und/oder Dimension von Fehlern oder Ungänzen des Werkstücks herangezogen werden, wenn z.B. die Komponente flächig abgescannt wird.

Bevorzugte elektrisch leitfähige Materialien, die mit dem erfindungsgemäßen Verfahren untersucht werden können, sind dabei ausgewählt aus der Gruppe bestehend aus Metallen und/oder Metalllegierungen, insbesondere Eisen, Stähle, Aluminium, Messing, Kupfer und Metallverbundwerkstoffe.

Vorteilhafte Werkstücke, die mit dem erfindungsgemäßen Verfahren untersucht werden können, sind dabei ausgewählt aus der aus der Gruppe bestehend aus Rohren, Pipelines, Schienen, Platten und Stäbe. Auch die Werkstücke sind lediglich als beispielhafte Ausführung zu verstehen.

Insbesondere ist beim Verfahren bevorzugt, wenn eine erfindungsgemäße Vorrichtung verwendet wird.

Die vorliegende Erfindung wird anhand der nachfolgenden Ausführungsformen sowie der beigefügten Figuren näher erläutert, ohne die Erfindung allerdings auf die dort dargestellten Parameter und Ausführungen zu beschränken.

Die folgenden Figuren zeigen:
- Figur 1: eine erste Ausführungsform einer erfindungsgemäßen Vorrichtung,
- Figur 2: eine weitere Ausführungsform einer erfindungsgemäßen Vorrichtung,
- Figur 3: eine alternative Ausgestaltungsform einer erfindungsgemäßen Vorrichtung,
- Figur 4: die Anordnung einer erfindungsgemäßen Vorrichtung relativ zu einem zu untersuchenden Werkstück mit einem Winkelprüfkopf.

Bei der hier beschriebenen neuen Ultraschall-Prüftechnik handelt es sich um eine Kombination der EMUS-Wandlertechnik und der Luftschallwandlertechnik. Hierdurch werden die Vorteile beider Techniken vereint und deren Nachteile vermieden. Diese neue Technik kann prinzipiell zur Prüfung und Charakterisierung aller elektrisch leitfähiger Materialein und Bauteile genutzt werden. Ein hohes Anwendungspotential wird insbesondere in der Fehlerprüfung und Wanddickenmessung an dünnwandigen Aluminium- und Stahlkomponenten gesehen. Genannt sei hier speziell die Inspektion von Gasleitungen und Gas-Pipelines auf Wanddickenänderungen und Innenrisse mittels durch die Leitungen durchlaufenden Prüfmolchen.

Der Gegenstand der Erfindung betrifft ebenso ein Verfahren zur berührungslosen Anregung und Empfang von Ultraschallwellen in elektrisch leitfähigen Materialien. Hierbei kommen zur Schallanregung und zum Empfang elektromagnetische Ultraschall-(EMUS)-Wandlern und Luftschallwandler zum Einsatz. Je nach Anwendung werden EMUS-Wandler zur Anregung und Luftschallwandler zum Empfang oder Luftschallwandler zur Anregung und EMUS-Wandler zum Empfang vorgesehen.

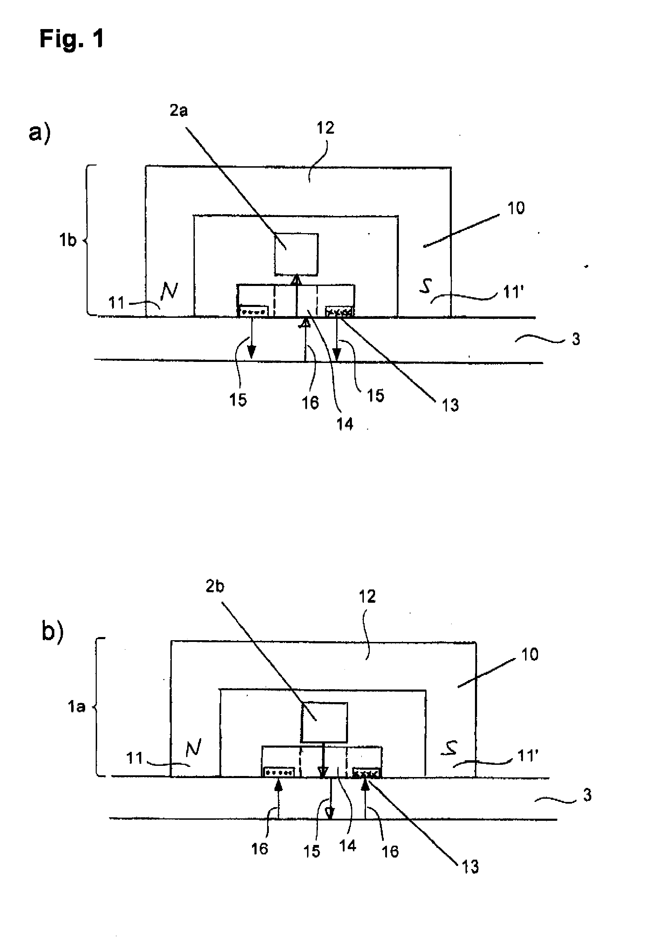

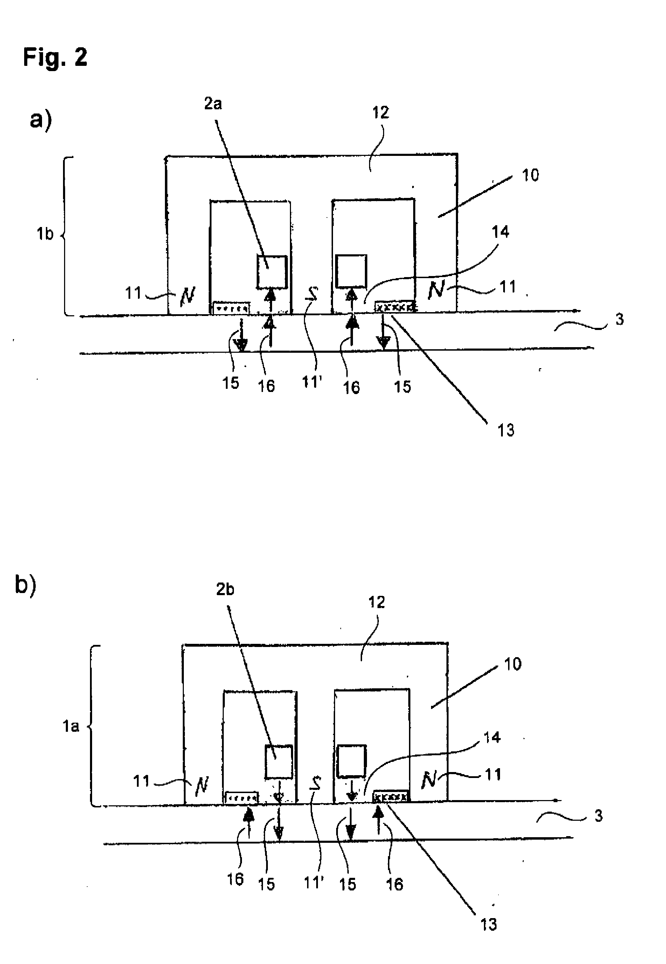

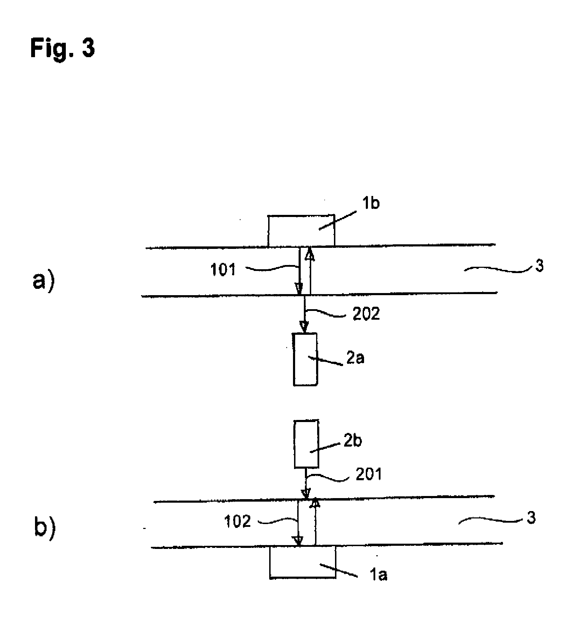

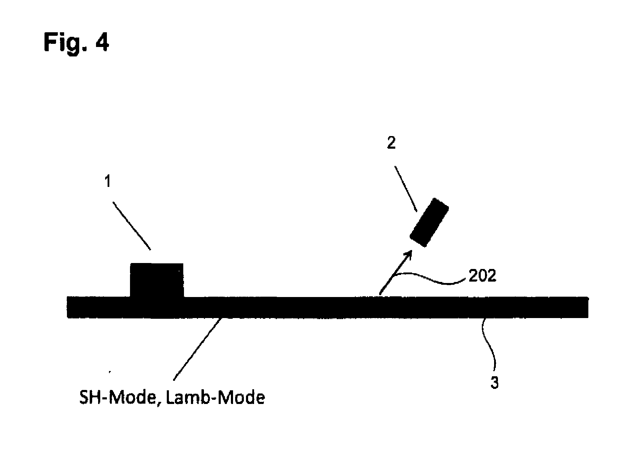

Prinzipiell sind zwei grundsätzliche Prüffunktionen möglich: 1. die Senkrechteinschallung und 2. die Winkeleinschallung. Im ersten Fall sind die Realisierung einer klassischen Wanddickenmessung oder Fehlerprüfung in Impuls-Echo-Technik (Fig. 1 und 2) und Durchschallungstechnik (Fig. 3) denkbar, wobei jeweils die tote Zone vermieden werden kann. Im zweiten Fall werden z.B. Lamb-oder SH-Moden genutzt (Fig. 4). Hier kann ebenfalls sowohl die Anregung mittels EMUS Wandler und der Empfang mittels Luftschallwandler als auch die Anregung mittels Luftschallwandler und der Empfang mittels EMUS Wandler vorteilhaft sein. Der Einsatz des Luftschallwandlers als Sender erfordert eine geringere Sendeleistung gegenüber dem EMUS Wandler. Ein weiterer Vorteil der Kombination von elektromagnetischen Sende- und Luftschallempfangswandlern ist in der möglichen räumlichen Auflösung bei Abtastung von Schallfeldern im Festkörper durch fokussierende Luftschallwandler trotz niedriger Prüffrequenz zu sehen, die von den großen Schallgeschwindigkeits- und damit Wellenlängenunterschieden im Metall und Luft herrührt. Für beide Anwendungskategorien können sowohl Impuls-Echo-Techniken als auch Durchschallungstechniken realisiert werden.

Figur 1 zeigt zwei alternative Ausführungsformen einer erfindungsgemäßen Vorrichtung, die einen EMUS-Wandler 1 sowie einen Luftschallwandler 2 aufweist.
Der Unterschied zwischen Figur 1a und 1b ist, dass in Figur 1a ein aktiver EMUS-Wandler 1b und ein passiver Luftschallwandler 2a umfasst sind bzw. diese Vorrichtungen auf aktive bzw. passive Art und Weise betrieben werden, während in Figur 1b ein passiver EMUS-Wandler 1a und ein aktiver Luftschallwandler 2b dargestellt sind bzw. diese Vorrichtungen auf passive bzw. aktive Art und Weise betrieben werden.

Die in den Figuren 1a und 1b dargestellte erfindungsgemäße Vorrichtung betrifft einen Kombiwandler, der einen EMUS-Wandler 1 (aktiver EMUS-Wandler 1b in Figur 1a bzw. passiver EMUS-Wandler 1a in Figur 1b) sowie einen Luftschallwandler (passiver Luftschallwandler 2a in Figur 1a bzw. aktiver Luftschallwandler 2b in Figur 1b) aufweist. Der Kombiwandler verfügt dabei über einen Magneten 10, dessen beide Pole 11 und 11' über eine Magnetbrücke 12 miteinander verbunden sind. Im Inneren des durch die Pole 11 und 11' sowie die Magnetbrücke 12 gebildeten Hohlraums ist dabei in Aufsicht unterhalb der Magnetbrücke 12 der Luftschallwandler 2 sowie die Magnetspule (Hochfrequenzspule) 13 des EMUS-Wandlers angeordnet. Die Spule weist dabei eine Ausnehmung 14 auf, die beispielsweise im Falle einer runden Spule ebenso rund ausfallen kann. Mittig über der Ausnehmung 14 ist der Luftschallwandler 2 angeordnet.

Gemäß der Ausführung in Figur 1a dient nun der EMUS-Wandler 1b als "Sender", d.h. die Hochfrequenzspule 13 wird derart betrieben, dass ein hochfrequentes elektromagnetisches Wechselfeld erzeugt und ausgesandt wird. Die Frequenzen des hochfrequenten elektromagnetischen Wechselfeldes liegen dabei z.B. im Frequenzbereich des Ultraschalls. Dieses elektromagnetische Wechselfeld kann in ein zu untersuchendes Werkstück 3 eingekoppelt werden, wie dies mit den Pfeilen mit Bezugszeichen 15 angedeutet ist. Das Werkstück 3 ist dabei nicht Bestandteil der erfindungsgemäßen Vorrichtung. Der Kombiwandler bzw. die erfindungsgemäße Vorrichtung kann dabei direkt auf dem Werkstück 3 aufliegen, das Werkstück 3 kann aber auch über einen gewissen Luftspalt vom Kombiwandler getrennt sein. Das ins Werkstück eingekoppelte hochfrequente elektromagnetische Wechselfeld induziert im Werkstück 3 nun Ultraschall, der beispielsweise auch in der mit dem Pfeil 16 gekennzeichneten Richtung das Werkstück 3 wieder verlässt und mittels des passiven Luftschallwandlers 2a detektiert werden kann. Der Luftschallwandler 2a wandelt dabei den detektierten Ultraschall in ein elektronisches Signal um, das weiter einer Auswertungseinheit (z.B. ein PC) zugeführt werden kann.

Das in Figur 1b dargestellte Prinzip des Kombiwandlers basiert auf einem aktiven Luftschallwandler 2b als "Sender"; dabei sendet der Luftschallwandler 2b Ultraschall aus, mit dem das Werkstück 3 beaufschlagt wird. Der Ultraschall wird in das Werkstück 3 eingekoppelt (dies ist mit dem Pfeil 15 angedeutet), dadurch wird ebenso ein elektromagnetisches Wechselfeld im Werkstück 3 induziert, das beispielsweise das Werkstück 3 an den Stellen, an denen die Pfeile 16 dargestellt sind, verlassen kann. Das im Werkstück 3 induzierte elektromagnetische Wechselfeld kann somit mittels einer Hochfrequenzspule 13, die Bestandteil eines passiven EMUS-Wandlers ist, detektiert werden. Das in der HF-Spule induzierte elektronische Signal kann weiter einer Auswertungseinheit (z.B. ein PC) zugeführt und dort verarbeitet und ausgewertet werden.

Figur 2 zeigt eine alternative Ausführungsform einer erfindungsgemäßen Vorrichtung, die ebenso als Kombiwandler ausgebildet ist. Auch hier zeigt Figur 2a eine Ausführungsform, die einen aktiven EMUS-Wandler 1b in Kombination mit einem passiven Luftschallwandler 2a aufweist, während in Figur 2b die Kombination eines aktiven Luftschallwandlers 2b mit einem passiven EMUS-Wandler 1a darstellt. Als wesentlichster Unterschied zur Ausführungsform gemäß Figur 1 ist der Magnet 10 abweichend vom in Figur 1 dargestellten Magneten ausgebildet. Der Magnet umfasst ebenso eine Magnetbrücke 12, über die die beiden Pole 11 und 11' dieses Permanentmagneten miteinander verbunden sind. Allerdings ist hier der zweite Pol 11' mittig in der Vorrichtung ausgebildet; um diesen Pol 11' ist der Luftschallwandler 2 konzentrisch, beispielsweise ringförmig, ausgebildet. Die übrigen Bezugszeichen und Funktionsmodi stimmen mit denen aus Figur 1 überein. Der in Figur 2 dargestellte Kombiwandler ist insbesondere für nicht ferromagnetische Komponenten vorgesehen. Bevorzugt sind dabei sowohl die HF-Spule 13 als auch der Luftschallwandler 2 ringförmig ausgestaltet. Der Magnet 10 kann z.B. als ein Topfmagnet ausgebildet werden.

Figur 3 zeigt zwei weitere Ausführungsformen einer erfindungsgemäßen Vorrichtung, bei denen der EMUS-Wandler 1 getrennt vom Luftschallwandler 2 ausgeführt ist. Das zu untersuchende Werkstück 3 wird dabei zwischen EMUS-Wandler 1 und Luftschallwandler 2 durchgeführt. In Figur 3a ist ein aktiv ausgestalteter EMUS-Wandler 1b vorgesehen, der Luftschallwandler 2a ist hierbei als passive Komponente ausgebildet. Die Hauptabstrahlrichtung des EMUS-Wandlers ist mit 101, die Hauptempfangsrichtung des Luftschallwandlers mit 202 dargestellt. Die Hauptabstrahlrichtung 101 des EMUS-Wandlers 1b und die Hauptempfangsrichtung 202 des Luftschallwandlers 2a weisen dabei einen Winkel von 180° auf, d.h. der EMUS-Wandler 1b ist genau gegenüberliegend zum Luftschallwandler 2a angeordnet. Möglich hierbei ist allerdings auch, dass beispielsweise der Luftschallwandler 2a verkippt angeordnet ist (und auch translationsversetzt verschoben sein kann), so dass andere Winkel zwischen der Hauptabstrahlrichtung 101 des EMUS-Wandlers 1b und der Hauptempfangsrichtung 202 des Luftschallwandlers 2a resultieren; derartige Winkel sind dann kleiner als 180°.

In Figur 3b ist das umgekehrte Prinzip dargestellt, wobei der Luftschallwandler 2b als aktive Komponente ausgebildet ist, d.h. das Werkstück 3 wird mit Ultraschall beaufschlagt, so dass ein elektromagnetisches Wechselfeld induziert wird. Hierbei ist der EMUS-Wandler 1a als passive Komponente ausgebildet; mit dem EMUS-Wandler 1a kann das im Werkstück 3 induzierte elektromagnetische Wechselfeld detektiert werden. Die übrigen Ausführungen, insbesondere bezüglich der gewinkelten Anordnung des Luftschallwandlers 2b und des EMUS-Wandlers 1a, die auch für Figur 3a gemacht wurden, gelten auch für Figur 3b in analoger Weise.

In Figur 4 ist eine weitere Ausführungsform der erfindungsgemäßen Vorrichtung dargestellt. Die Vorrichtung umfasst dabei einen (aktiven oder passiven) EMUS-Wandler 1, der mit einem (passiven oder aktiven) Luftschallwandler 2 kombiniert wird. Im in Figur 4 dargestellten Beispiel ist der EMUS-Wandler als aktive Komponente, der Luftschallwandler als passive Komponente ausgebildet. Im Gegensatz zu den in Fig. 1 bis 3 dargestellten Ausführungsformen ist der EMUS-Wandler hier als Winkelprüfkopf ausgebildet, d.h. es erfolgt eine Einschallung, die von der Flächennormalen der Oberfläche des Werkstücks abweicht. Sowohl EMUS-Wandler 1 als auch Luftschallwandler 2 sind auf der gleichen Seite des zu untersuchenden Werkstücks 3 angeordnet, jedoch voneinander beabstandet. Für den Fall, dass der EMUS-Wandler die aktive Komponente darstellt, d.h. mittels eines elektromagnetischen Wechselfeldes im Werkstück 3 ultraschallinduziert wird, kann sich der Ultraschall im Werkstück 3 beispielsweise über SH-Moden oder Lamb-Moden ausbreiten. Der im Werkstück 3 induzierte Ultraschall kann an einer beabstandeten Stelle über den Luftschallwandler 2 (der in diesem Fall ein passiver Luftschallwandler ist) detektiert werden. Der Ultraschall wird dabei aus dem Werkstück (wie mit Pfeil 202 angedeutet) ausgekoppelt. Die Hauptempfangsrichtung des Luftschallwandlers ist dabei gegenüber der Flächennormalen des Werkstücks 3 wie in Figur 4 dargestellt leicht gekippt angeordnet, während die Hauptabstrahlrichtung des EMUS-Wandlers im in Figur 4 dargestellten Fall gewinkelt zur Flächennormalen des Werkstücks 3 verläuft. Bevorzugte Einschallwinkel können hierbei z.B. von 10° bis 90° relativ zur Flächennormalen der Oberfläche des Werkstücks betragen. Der Schnittwinkel der Hauptabstrahlrichtung des EMUS-Wandlers und der Hauptempfangsrichtung des Luftschallwandlers kann herangezogen werden, um die Anordnung von EMUS-Wandler und Luftschallwandler zu charakterisieren. Wie in Figur 4 dargestellt, beträgt dieser Winkel ca. 35°.

## Patentansprüche

1. Vorrichtung zur berührungslosen Überprüfung von Werkstücken (3), umfassend mindestens einen elektromagnetischen Ultraschallwandler (EMUS-Wandler) (1) sowie mindestens einen Luftschallwandler (2).

2. Vorrichtung nach Anspruch 1, **dadurch gekennzeichnet, dass** der mindestens eine elektromagnetische Ultraschallwandler (1) mindestens einen Magneten (10) zur Erzeugung eines permanenten Bias-Magnetfeldes, insbesondere einen Permanentmagneten, einen Elektromagneten und/oder Kombinationen hieraus sowie mindestens eine Spule (13) zur Erzeugung oder Detektion eines parallel zum permanenten Bias-Magnetfeld verlaufenden temporären magnetischen Wechselfeldes umfasst.

3. Vorrichtung nach vorhergehendem Anspruch, **dadurch gekennzeichnet, dass** der mindestens eine Magnet (10) zur Erzeugung eines permanenten Magnetfeldes über ein die beiden Pole (11, 11') des Magneten verbindendes Magnetjoch (12) verfügt und die mindestens eine Spule (13) in Aufsicht auf das Magnetjoch (12) unterhalb des Magnetjochs (12) angeordnet ist, wobei bevorzugt der mindestens eine Luftschallwandler (2) in Aufsicht auf das Magnetjoch (12) unterhalb des Magnetjochs (12) angeordnet ist und/oder bevorzugt der mindestens eine Luftschallwandler (2) zwischen Magnetjoch (12) und der Spule (13) angeordnet ist.

4. Vorrichtung nach vorhergehendem Anspruch, **dadurch gekennzeichnet, dass** die mindestens eine Spule (13) über eine Aussparung (14) verfügt, wobei der mindestens eine Luftschallwandler (2) auf der dem Magnetjoch (12) zugewandten Seite der Spule (13) mittig über der Aussparung (14) angeordnet ist.

5. Vorrichtung nach einem der vorhergehenden Ansprüche, **dadurch gekennzeichnet, dass** der mindestens eine Luftschallwandler (2) als separates, vom elektromagnetischen Ultraschallwandler (EMUS-Wandler) (1) getrenntes Bauteil ausgeführt ist.

6. Vorrichtung nach vorhergehendem Anspruch, **dadurch gekennzeichnet, dass**
a) der mindestens einen Luftschallwandler (2) beabstandet zum mindestens einen elektromagnetischen Ultraschallwandler (EMUS-Wandler) (1) angeordnet ist, so dass ein zu überprüfendes Werkstück zwischen dem mindestens einen Luftschallwandler (2) und dem mindestens einen elektromagnetischen Ultraschallwandler (EMUS-Wandler) durchführbar ist, wobei die Hauptabstrahlrichtung (201) oder Hauptempfangsrichtung (202) des mindestens einen Luftschallwandlers (2) und die Hauptabstrahlrichtung (101) oder Hauptempfangsrichtung (102) des mindestens einen elektromagnetischen Ultraschallwandlers (EMUS-Wandler) (1) einen Winkel von 100 bis 180° einschließen, und/oder
b) der mindestens einen Luftschallwandler (2) beabstandet zum mindestens einen elektromagnetischen Ultraschallwandler (EMUS-Wandler) (1) angeordnet ist, so dass sowohl der mindestens einen Luftschallwandler (2) als auch der mindestens einen elektromagnetischen Ultraschallwandler (EMUS-Wandler) (1) auf der gleichen Seite eines zu überprüfenden Werkstücks (3) angeordnet sind, wobei die Hauptabstrahlrichtung (201) oder Hauptempfangsrichtung (202) des mindestens einen Luftschallwandlers (2) und die Hauptabstrahlrichtung (101) oder Hauptempfangsrichtung (102) des mindestens einen elektromagnetischen Ultraschallwandlers (EMUS-Wandler) (1) einen Winkel von 0 bis 80° einschließen.

7. Vorrichtung nach einem der Ansprüche 2 bis 6, **dadurch gekennzeichnet, dass** die mindestens eine Spule (13) einen kreisrunden, ovalen, rechteckigen oder Schmetterlings-förmigen Querschnitt aufweist.

8. Vorrichtung nach einem der vorhergehenden Ansprüche, **dadurch gekennzeichnet, dass**
a) der mindestens eine elektromagnetische Ultraschallwandler (EMUS-Wandler) (1) ein aktiver elektromagnetischer Ultraschallwandler (1a) zur Erzeugung elektromagnetischer Wechselfelder und der mindestens eine Luftschallwandler (2) ein passiver Luftschallwandler (2b) zum Empfang akustischer Ultraschallwellen, oder
b) der mindestens eine elektromagnetische Ultraschallwandler (EMUS-Wandler) (1) ein passiver elektromagnetischer Ultraschallwandler (1b) zum Empfang elektromagnetischer Wechselfelder und der mindestens eine Luftschallwandler (2) ein aktiver Luftschallwandler (2b) zur Erzeugung akustischer Ultraschallwellen ist.

9. Verfahren zur berührungslosen Anregung und Empfang von Ultraschallwellen in Werkstücken (3) aus elektrisch leitfähigen Materialien, bei dem a) mittels eines elektromagnetischen Wechselfeldes in zumindest einem Bereich des Werkstücks (3) Ultraschall induziert wird und der Ultraschall akustisch detektiert wird, und/oder b) mittels Ultraschall in zumindest einem Bereich des Werkstücks (3) ein elektromagnetisches Wechselfeld induziert wird und das elektromagnetische Wechselfeld detektiert wird.

10. Verfahren nach vorhergehendem Anspruch, **dadurch gekennzeichnet, dass**
a) das zur Induktion von Ultraschall verwendete elektromagnetische Wechselfeld eine Frequenz in einem Bereich von 200 kHz bis 5 MHz, bevorzugt von 400 kHz bis 2 MHz, und/oder
b) der zur Induktion des elektromagnetischen Wechselfeldes verwendete Ultraschall eine Frequenz in einem Bereich von 200 kHz bis 5 MHz, bevorzugt von 400 kHz bis 2 MHz aufweist.

11. Verfahren nach einem der Ansprüche 9 bis 10, **dadurch gekennzeichnet, dass**
a) das zur Induktion von Ultraschall verwendete elektromagnetische Wechselfeld und/oder der zur Induktion des elektromagnetischen Wechselfeldes verwendet Ultraschall in einem Winkel von 0 bis 80° bezüglich einer Flächennormalen einer Oberfläche des Werkstücks (3) eingestrahlt wird und/oder
b) das induzierte elektromagnetische Wechselfeld und/oder der induzierte Ultraschall in einem Winkel von 0 bis 80° bezüglich einer Flächennormalen einer Oberfläche des Werkstücks (3) detektiert wird.

12. Verfahren nach einem der Ansprüche 9 bis 11, **dadurch gekennzeichnet, dass** das induzierte elektromagnetische Wechselfeld und/oder der induzierte Ultraschall
a) auf der gleichen Seite des Werkstücks (3), und/oder
b) auf der gegenüberliegenden Seite des Werkstücks (3),
von der die Induktion erfolgt, detektiert wird.

13. Verfahren nach einem der Ansprüche 9 bis 13, **dadurch gekennzeichnet, dass** das Werkstück (3) relativ zu einer parallel zur Flächennormalen der Oberfläche des Werkstücks (3) verlaufenden Komponente des zur Induktion verwendeten elektromagnetischen Wechselfeldes und/oder Ultraschalls bewegt wird, wobei bevorzugt
a) eine Änderung der Amplitude und/oder der Laufzeit des detektierten elektromagnetischen Wechselfeldes und/oder des Ultraschalls mit einer Änderung der Schichtdicke des Werkstücks (3) und/oder dem Vorhandensein von Materialfehlern im Werkstück (3) korreliert wird, und/oder
b) die Amplitudenortskurven des detektierten elektromagnetischen Wechselfeldes und/oder des Ultraschalls aufgezeichnet und die Amplitude und/oder die Phase des detektierten elektromagnetischen Wechselfeldes und/oder des Ultraschalls als Funktion des Ortes ausgewertet werden.

14. Verfahren nach einem der Ansprüche 9 bis 13, **dadurch gekennzeichnet, dass**
a) das elektrisch leitfähige Material ausgewählt ist aus der Gruppe bestehend aus Metallen und/oder Metalllegierungen, insbesondere Eisen, Stähle, Aluminium, Messing, Kupfer und Metallverbundwerkstoffe und/oder
b) das Werkstück (3) ausgewählt ist aus der Gruppe bestehend aus Rohren, Pipelines, Schienen, Platten und Stäbe.

15. Verfahren nach einem der Ansprüche 9 bis 14, **dadurch gekennzeichnet, dass** eine Vorrichtung nach einem der Ansprüche 1 bis 8 verwendet wird.
